# EUROPEAN PATENT SPECIFICATION

(11) **EP 2 214 519 B1**
(45) Date of publication and mention of the grant of the patent: **22.06.2011**
(21) Application number: 08845195.0
(22) Date of filing: 22.10.2008
(51) Int. Cl.: A23L 1/39, A23L 1/40, A23L 1/30

(54) **SOUP OR SAUCE COMPOSITION AND PROCESS FOR ITS PRODUCTION**
SUPPEN- ODER SOSSENZUSAMMENSETZUNG UND HERSTELLUNGSVERFAHREN DAFÜR
COMPOSITION DE SOUPE OU DE SAUCE ET SON PROCÉDÉ DE PRODUCTION

(30) Priority: 29.10.2007 EP 07254273
(43) Date of publication of application: 11.08.2010
(73) Proprietor: Lipid Nutrition B.V., 1521 AZ Wormerveer (NL)
(72) Inventor: MULDER, Ellen, Maria, Elizabeth, 1521 AZ Wormerveer (NL); VAN WANROIJ, Miriam, Aldegonda, Josephina, 1521 AZ Wormerveer (NL); MONSTER, Jeroen, 1521 AZ Wormerveer (NL); SCHMID, Ulrike, 1521 AZ Wormerveer (NL)
(74) Representative: Stevens, Ian Edward
(86) International application number: PCT/EP2008/008915
(87) International publication number: WO 2009/056251

(56) References cited:
- EP-A- 1 088 552
- EP-A- 1 129 711
- EP-A- 1 685 834
- US-A- 5 370 896

## Description

This invention relates to a soup or sauce composition and to a process for its production.

The nutritional value of the diet has come under increasing scrutiny. Food supplements are often taken by individuals in order to obtain nutritional benefits. However, food supplements are typically in the form of capsules or the like and have the disadvantage that they are inconvenient in that an individual has to remember to take them. Food supplements of this type are typically not flavoured and are not attractive to many consumers.

Nutritional supplements have been incorporated into food products but the resulting food products can have an undesirable taste and the incorporation of the supplement can have a deleterious effect on the stability of the products.

Pinolenic acid (i.e., 5, 9, 12 C18:3 fatty acid, a fatty acid with 18 carbon atoms having three *cis* double bonds in the positions 5, 9 and 12) is present in, for example, pine nut oil and fractions thereof (see J Am Oil Chem Soc 1998, 75, p.45-50). Pinolenic acid, as a highly unsaturated fatty acid, can be expected to suffer from the problem of low oxidative stability, particularly when incorporated into foods and soup or sauces.

EP-A-1685834 relates to the use of pinolenic acid and its derivatives for weight management by reducing the feeling of hunger and/or increasing satiety. A variety of product forms are mentioned.

EP-A-1129711 describes the use ofpinolenic acid in the treatment of diabetes.

EP-A-1088552 discloses compositions containing pinolenic acid and their use as an anti-inflammatory agent.

US 5972408 discloses a pesto sauce comprising pine nuts.

US5370896 discloses a sauce or soup comprising from 2% to 10% by weight of fat droplets as an emulsion in an aqueous base.

US 4840806 discloses a tomato sauce comprising soybean oil.

Recipes for soups containing pine nuts are disclosed at http://www.vinidelsannio.it/index.php?tipo=contenuto&ID=107&ID 1=41 &ID2=0 &ID3=0&subpage=true and http://www.soupsong.com/rpinenut.html.

It has now been found that a convenient vehicle for the consumption of pinolenic acid and its derivatives can be provided by certain soup or sauces. Surprisingly, it is possible to incorporate the pinolenic acid or derivative in these compositions in relatively high amounts and yet still achieve good oxidative stability compared to other, less unsaturated oils or oils having the same amount of unsaturation. The compositions also have good organoleptic properties (including taste and texture) and good stability. Additionally, it is possible for the compositions to have a low calorie content and still achieve these advantages.

Accordingly, the present invention provides a soup or sauce comprising: water; one or more components selected from meat ingredients, vegetable ingredients and carbohydrates; and from 0.5 to 20% by weight added fat, wherein said fat comprises from 5 to 35% by weight pinolenic acid.

In another aspect, the invention comprises a composition which, upon rehydration with water, forms a soup or sauce according to the invention.

A further aspect of the invention is a process for producing a soup or sauce according to the invention or a composition according to the invention, which comprises adding to one or more components selected from water, meat ingredients, vegetable ingredients and carbohydrates, from 0.5% to 20% by weight fat, wherein said fat comprises from 5 to 35% by weight pinolenic acid.

In a further aspect, the invention provides the use of a fat comprising from 5 toy 35% by weight pinolenic acid in a soup or sauce for improving the appearance and/or the organoleptic properties of the soup or sauce, preferably for improving the creaminess of the soup or sauce.

The soup or sauce of the invention comprises one or more components selected from meat and vegetable ingredients and carbohydrates. Suitable meats include, for example, beef, chicken, lamb and pork (such as ham), and the term "meat" in this context also includes fish and shellfish. The term "vegetable" is used in a culinary sense and includes any parts of an edible plant or fungus. Suitable vegetables include, for example, tomato, carrot, leek, onion, mushroom, pea, pumpkin, potato, cucumber, mint, asparagus, bean, lentil, chickpea, spices (such as nutmeg and pepper), pine nuts and mixtures thereof. Meat and vegetables are in a form that is suitable for incorporation into soups and sauces, such as in dried and/or comminuted forms, as will be well-known to those skilled in the art. The soups and sauces may contain one or more vegetable ingredients and/or one or more meat ingredients. Particularly preferred soups are those that comprise tomato and mushroom, particularly preferred sauces are those that comprise tomato. Preferably, the soup is a tomato or mushroom soup and the sauce is a tomato sauce.

Preferably, the sauce or soup of the invention does not comprise pine nuts or non-fat, preferably solid, material derived from pine nuts.

Carbohydrates may be used singly or as a mixture of two or more carbohydrates. Preferred carbohydrates for use in the soup or sauce of the invention include sucrose, starch, modified starch, xanthan and mixtures thereof. At least part of the carbohydrate may be provided by flour.

The soup or sauce of the invention comprises from 0.5% to 20% by weight added fat, more preferably from 0.6 to 19%, such as from 0.7 to 18%, more preferably from 0.9 to 15%, even more preferably from 1 to 10%, such as from 1.5 to 5% by weight added fat. The fat comprises from 5 to 35% by weight pinolenic acid, based on the total fatty acids (i.e., C12 to C24 carboxylic acids) present in the fat, more preferably from 7 to 30%, even more preferably from 10 to 20% by weight pinolenic acid, based on the total fatty acids (i.e., C12 to C24 carboxylic acids) present in the fat. Typically, the pinolenic acid will be present in the fat in the form of a glyceride, such as a triglyceride. The term "added fat" refers to fat that does not form part of any vegetable and/or meat ingredients or the carbohydrate or any other components of the soup or sauce. For example, the fat is added separately from any pine nuts that are present in the soup or sauce. The fat typically comprises at least 80% by weight or at least 90% by weight, such as at least 95% by weight of triglycerides. The fat may be pine nut oil.

Preferably, the soup or sauce of the invention comprises from 1% to 10% by weight carbohydrates and from 0.5% to 10% by weight protein.

Sources of protein for the soups and sauces of the invention are preferably selected from the group consisting of whey solids, skimmed milk powder, soya protein, low fat yoghurt, skimmed milk and mixtures thereof.

The soup or sauce may comprise an added fat A and a further fat B, wherein fat A comprises from 5 to 35% by weight pinolenic acid and fat B is selected from the group consisting of: dairy fats (such as butter, cream and sour cream); cocoa butter equivalents, cocoa butter, palm oil or fractions thereof, palm kernel oil or fractions thereof, interesterified mixtures of above fats or fractions or hardened components thereof; liquid oils, such as sunflower oil, high oleic sunflower oil, soybean oil, rapeseed oil, cottonseed oil, safflower oil, high oleic safflower oil, olive oil, flaxseed oil, maize oil or MCT oils; and mixtures thereof. Fat B does not form part of the "added fat" as defined herein. Fat A may be mixed with fat B prior to addition to the soup or sauce or fat A and fat B can be included separately. Typically, the weight ratio of fat A to fat B is from 100:1 1 to 1:10, more preferably from 10:1 to 1:2, such as from 5:1 to 1:1.

Examples of fatty acids that may be present in the fat B, in addition to or separate from other saturated and unsaturated fatty acids, include linoleic acid, oleic acid, arachidonic acid, taxoleic, juniperonic, sciadonic, conjugated linoleic acid, an enriched isomer mixture of conjugated linoleic acid, EPA (eicosapentaenoic) and DHA (docosahexaenoic). These fatty acids will usually be present in the form of glycerides.

Preferably, the soup or sauce comprises from 0.5 to 10% by weight of protein. The protein can be added as such in a relatively concentrated from (e.g., having a protein content of greater than 70% by weight) or may form part of another material that is included in the composition, such as milk or yoghurt, for example. Preferably, the protein is selected from the group consisting of whey solids, skimmed milk powder and soya protein, cream, sour cream, low fat yoghurt, skimmed milk and mixtures thereof.

Soups or sauces of the invention preferably comprise at least 60% by weight of water, more preferably at least 70% by weight water, even more preferably from 80 to 95% by weight water. Water can be included as relatively pure water or as part of another material such as, for example, milk or yoghurt.

The soups and sauces preferably contain carbohydrates. Carbohydrates have the general formula CₙH₂ₙOₙ and are divided in three main groups: monosaccharides, disaccharides and polysaccharides. Examples of suitable monosaccharides include glucose, galactose, and fructose. Suitable disaccharides can be sucrose, lactose and maltose. Examples of polysaccharides often referred to as fibers or used as thickeners include starch, cellulose, pectin, glycogen, xanthan, gum acacia, modified food starches (e.g., alkenylsuccinate modified food starches), anionic polymers derived from cellulose (e.g. carboxymethylcellulose), gum ghatti, modified gum ghatti, xanthan gum, tragacanth gum, guar gum, locust bean gum, pectin, gelatine, carrageenan and mixtures thereof. Preferred carbohydrates for use in the soup or sauce of the invention include sucrose, starch, modified starch, xanthan and mixtures thereof.

Typical amounts of carbohydrates are from 1.0 to 10% by weight of the compositions.

This invention includes a soup or sauce composition comprising on dry basis 3 to 40% added fat, wherein said fat comprises from 5 to 35% by weight pinolenic acid.

Soups and sauces of the invention may include one or more solids such as meat or vegetable pieces, pasta or noodles.

The soups and sauces of the invention may be formed from a composition of the invention upon rehydration with water. Such compositions are also known as dried or instant soups and sauces. Typically, the water that is used for reconstitution is hot water. The compositions are typically adapted for reconstitution with a volume of water in the range of from 100 ml to 500 ml. These compositions preferably comprise on dry basis 3 to 40% added fat, wherein said fat comprises from 5 to 35% by weight pinolenic acid.

It has been found that by combining the soup or sauce ingredients according to the invention and adapting the level of pinolenic acid or derivative in the fat phase, it is possible to obtain a soup or sauce having one or more of: improved taste; stability in that there is little phase separation; no problems with aggregation and/or flocculation of particulate matter; no creaming; good homogeneity; enhanced viscosity; good colour; balanced flavour; little or no aftertaste; and an optimal droplet size distribution. Many or all of these positive effects preferably persist over time e.g., all of the effects remain positive over a period of at least 3 months, preferably about 6 to 12 months. Surprisingly, these positive attributes can be achieved in soups and sauces having relatively low energy contents. This means that it is possible to produce a low calorie product comprising pinolenic acid.

Moreover, despite the level of unsaturation of pinolenic acid, the soups and sauces have unexpectedly good oxidative stability when compared to other oils, such as high oleic sunflower oil, or sunflower oil.

A synergistic nutritional effect may also be present between the fat phase of the soups/sauces and other components in the soups/sauces, for example vegetable puree, extra vitamins. An example of such an effect is an enhancement of the weight management effect due to a feeling of satiety.

Preferably, the soup or sauce composition of the invention is a low calorie product. For example, the soup or sauce composition may have an energy content of less than 100 kcal /100g, more preferably less than 80 kcal/100g, even more preferably from 55 to 75kcal/100g. Calorie contents can be determined by methods well known to those skilled in the art, for example, as set out in Mullan, 2006, Labelling Determination of the Energy Content of Food: http://www.dairyscience.info/energy_label.asp#3 and/or FAO Food And Nutrition Paper 77, Food energy - methods of analysis and conversion factors, Report of a Technical Workshop, Rome, 3-6 December 2002, Food And Agriculture Organization of the United Nations, Rome, 2003, ISBN 92-5-105014-7.

Soup or sauce compositions of the invention optionally comprise one or more additional additives selected from flavours, colouring agents, vitamins, minerals, acidity regulators, preservatives, emulsifiers, antioxidants, and mixtures thereof. Each of these materials may be a single component or a mixture of two or more components.

Examples of suitable vitamins and minerals include calcium, iron, zinc, copper, phosphorous, biotin, folic acid, pantothenic acid, iodine, vitamin A, vitamin C, vitamin B1, vitamin B2, vitamin B3, vitamin B6, vitamin B9, vitamin B12, vitamin D, vitamin E, and vitamin K. Preferably, wherein a vitamin or mineral is utilized the vitamin or mineral is selected from iron, zinc, folic acid, iodine, vitamin A, vitamin C, vitamin Be, vitamin B3, vitamin B6, vitamin B12, vitamin D, and vitamin E.

Acidity regulators include organic as well as inorganic edible acids. The acids can be added or be present in their undissociated form or, alternatively, as their respective salts, for example, potassium or sodium hydrogen phosphate, potassium or sodium dihydrogen phosphate salts. The preferred acids are edible organic acids which include citric acid, malic acid, fumaric acid, adipic acid, phosphoric acid, gluconic acid, tartaric acid, ascorbic acid, acetic acid, phosphoric acid, or mixtures thereof. Glucono Delta Lactone (GDL) may also be used, particularly wherein it is desired to reduce pH without introducing excessive acidic, or tart, flavour in the final composition.

Preservatives may be selected from the group consisting of sorbate preservatives, benzoate preservatives, and mixtures thereof.

Antioxidants include, for example, natural or synthetic tocopherols, TBHQ, BHT, BHA, free radical scavengers, propylgallate, ascorbylesters of fatty acids and enzymes with anti-oxidant properties.

The soup or sauces of the invention may be free of dairy material and, for example, may be free of lactose.

The soup or sauce composition may be produced by a process which comprises adding to one or more components selected from water, meat ingredients, vegetable ingredients and carbohydrates, from 0.5% to 20% by weight fat, wherein said fat comprises from 5 to 35% by weight pinolenic acid. Any remaining components are added thereafter.

A preferred process of the invention comprises:
(i) forming an emulsion of the fat in water in the presence of a protein;
(ii) forming a dispersion or solution of a carbohydrate in water;
(iii) optionally adding one or more additional ingredients;
(iv) mixing the compositions prepared in steps (i) and (ii) under shear;
(v) optionally homogenising and/or pasteurising; and
(vi) optionally cooling.

Pinolenic acid or a derivative of pinolenic acid (such as a glyceride e.g., a triglyceride) is an essential component of the compositions of the invention. Sources of pinolenic acid and its derivatives are available and will be known to those skilled in the art. Preferably, the pinolenic acid or derivative is in the form of pine nut oil or is derived from pine nut oil.

The pinolenic acid or derivative in the soup or sauce compositions may form part of a fat composition that comprises one or more other components. The fat will typically be present in the soup or sauce composition in the form of an emulsion, suspension or dispersion. The fat is generally present homogeneously throughout the aqueous phase of the soup or sauce.

Examples of other fatty acids that may be present in the fat include linoleic acid, oleic acid, taxoleic, juniperonic, sciadonic, saturated fatty acids, conjugated linoleic acid (optionally as an enriched isomer mixture), arachidonic acid, EPA (eicosapentaenoic) and DHA (docosahexaenoic)

Particularly preferred fats used in soup or sauce compositions of the invention are those in which the pinolenic acid or derivative is in the form of a composition which additionally comprises from 30 to 70 % by weight linoleic acid or derivative thereof, based on the total weight of fatty acids in the fat (calculated as free fatty acid). Additionally or alternatively, the pinolenic acid or derivative is in the form of a fat which additionally comprises from 10 to 40 % by weight oleic acid or derivative thereof, based on the total weight of fatty acids in the fat (calculated as free fatty acid). Additionally or alternatively, the pinolenic acid or derivative is in the form of a fat which additionally comprises from 1 to 15 % by weight palmitic acid or derivative thereof, based on the total weight of fatty acids in the fat (calculated as free fatty acid). Additionally or alternatively, the fat may comprise from 0.5 to 5 wt% of taxoleic acid or a derivative thereof.

Specific examples of fats comprising pinolenic acid or a derivative thereof that are useful in the invention include the following:
- Fat compositions comprising from 10 to 35 %, more preferably from 15 to 30 %, by weight pinolenic acid or a derivative thereof, together with from 30 to 70 % by weight linoleic acid or a derivative thereof;
- Fat compositions comprising from 10 to 35 %, more preferably from 15 to 30 %, by weight pinolenic acid or a derivative thereof, together with from 10 to 40 % by weight oleic acid or a derivative thereof;
- Fat compositions comprising from 10 to 35 %, more preferably from 15 to 30 %, by weight pinolenic acid or a derivative thereof, together with from 1 to 15 % by weight palmitic acid or a derivative thereof;
- Fat compositions comprising from 10 to 35 %, more preferably from 15 to 30 %, by weight pinolenic acid or a derivative thereof, together with from 0.5 to 5 wt% of taxoleic acid or a derivative thereof;
- Fat compositions comprising from 10 to 35 %, more preferably from 1 to 30 %, by weight pinolenic acid or a derivative thereof, together with from 30 to 70 % by weight linoleic acid or a derivative thereof and from 10 to 40 % by weight oleic acid or a derivative thereof;
- Fat compositions comprising from 10 to 35 %, more preferably from 15 to 30 %, by weight pinolenic acid or a derivative thereof together with from 30 to 70 % by weight linoleic acid or a derivative thereof and from 1 to 15 % by weight palmitic acid or a derivative thereof;
- Fat compositions comprising from 10 to 35 %, more preferably from 15 to 30 %, by weight pinolenic acid or a derivative thereof together with from 30 to 70 % by weight linoleic acid or a derivative thereof and from 0.5 to 5 wt% of taxoleic acid or a derivative thereof;
- Fat compositions comprising from 10 to 35 %, more preferably from 15 to 30 %, by weight pinolenic acid or a derivative thereof together with from 30 to 70 % by weight linoleic acid or a derivative thereof, from 1 to 15 % by weight palmitic acid or a derivative thereof and from 10 to 40 % by weight oleic acid or a derivative thereof; and
- Fat compositions comprising from 10 to 35 %, more preferably from 15 to 30 %, by weight pinolenic acid or a derivative thereof, together with from 30 to 70 % by weight linoleic acid or a derivative thereof, from 1 to 15 % by weight palmitic acid or a derivative thereof, from 10 to 40 % by weight oleic acid or a derivative thereof and from 0.5 to 5 wt% of taxoleic acid or a derivative thereof.

In these fats and other aspects of the invention, the amounts of the acids or derivatives are determined by GC FAME. Preferably, the fatty acids are present as glycerides (more preferably- triglycerides) (i.e., more than 90 %, preferably more than 95 %, by weight of the fatty acids are present as glycerides, more preferably triglycerides). Another preferred glyceride is the diglyceride.

In a preferred embodiment of the invention, the pinolenic acid or derivative represents at least 75 % by weight of the total Δ5 -polyunsaturated C 18-C20 fatty acids in the fat (calculated as free fatty acid).

A suitable source for the pinolenic acid used in the present invention is pine nut oil or concentrates thereof. For example, glycerides of pinolenic acid can be obtained from pine nut oil or concentrates thereof. An oil or concentrate with a content of pinolenic acid or a derivative thereof of more than 15 % by weight or more than 28 % by weight may be used (such as up to 50 % by weight).

Concentrates of pinolenic acid or a derivative thereof that may be used in the present invention can be prepared by any suitable process. A suitable process is described in EP-A-1088552.

The fats comprising pinolenic acid or a derivative thereof that are useful in the invention may comprise one or more other fatty acids. The term fatty acid, as used herein, refers to straight chain carboxylic acids having from 12 to 24 carbon atoms and being saturated or unsaturated e.g., having 0, 1, 2 or 3 double bonds. Pinolenic acid derivatives, as referred to herein, include glycerides, preferably triglycerides.

The pinolenic acid or derivative thereof is optionally blended with additional fatty acids or glycerides before being used in the fat of the present invention. When the compositions contain one or more fatty acids and/or glycerides in addition to the pinolenic acid or derivative thereof, the additional fatty acid(s) and/or glycerides are preferably selected from liquid oils, such as soybean oil, sunflower oil, rape seed oil and cotton seed oil; cocoa butter and cocoa butter equivalents; palm oil and fractions thereof; enzymically made fats; fish oils and fractions thereof; conjugated linoleic acid and enriched isomer mixtures; gamma linolenic acid and enriched mixtures thereof; hardened liquid oils; and mixtures thereof.

The pinolenic acid or derivative thereof can be included in the soup or sauce of the invention as an oil or in the form of a powder, such as a free flowing powder. Pinolenic acid and its derivatives in powder form can be produced, for example, by spray drying pinolenic acid or its derivatives, or a fat comprising pinolenic acid or its derivatives, with protein and/or carbohydrate, with the powder typically comprising from 50 to 90% of fat. It has been found that use of the powder can give extra stability to the soup or sauce.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

### Examples

### Example 1

### Tomato soup

| % by weight | Ingredient |
|---|---|
| 52 | Tomato |
| 2 | Pinno Thin^{™} |
| 1.5 | Butter |
| 2.7 | Modified starch |
| 3.5 | Sucrose |
| 1 | Skimmed milk powder |
| 0.04 | Basil |
| 0.38 | Salt |
| To 100% | Water |

PinnoThin is a mixture of triglycerides and is a trademark of Lipid Nutrition BV (Wormerveer, The Netherlands) and has the following fatty acid profile determined by FAME:

| | |
|---|---|
| Pinolenic acid | 16 |
| Linoleic acid | 46 |
| Oleic acid | 25 |
| Palmitic acid | 4 |
| Taxoleic acid | 2 |
| Others | balance to 100 |

### Example 2

### White sauce

| % by weight | Ingredient |
|---|---|
| 3.5 | PinnoThin^{™} |
| 2.5 | Modified starch |
| 2.5 | Flour |
| 3.5 | Sucrose |
| 0.3 | Xanthan |
| 4.6 | Milk protein |
| 0.04 | Nutmeg |
| 0.38 | Salt |
| To 100% | Water |

### Example 3

### Tomato sauce showing the effect of pinolenic acid

Two tomato sauces were prepared to show the effect of pinolenic acid (as the triglyceride) at a level of 4% by weight compared to a lower level in combination with another fat conventionally used in food products i.e., sunflower oil. The sauces were prepared as follows.

A tomato sauce (Buon Appetito tomatensaus (sugo di mamma) having a calorie content of 38kcal/100g, 1.5g protein/100g, 6.9g, carbohydrate/100g and 0.3g fat/100g) was homogenized by using an Ultra Turrax (200/50 bar). Solid particles were removed by filitration. The sauce was warmed up to 50°C and divided into two parts (A and B). At 50°C to sauce A 0.5% by weight PinnoThin^{™} and 3.5% by weight sunflower oil were added and to sauce B 4% by weight of PinnoThin^{™} was added by using an Ultra Turrax (200/50 bar).

Sauce A and sauce B were assessed by a group of six trained panellists who rated the sauces on a scale of from 0 to 100 (with 100 being the greater creaminess, odour and taste). The average values were calculated.

The results were as follows:

| | Sauce A (comparative) | Sauce B (invention) |
|---|---|---|
| Appearance (creaminess) | **46.6** | **50** |
| Odour-tomato | 50 | 49.1 |
| Odour-PinnoThin | 0 | 5 |
| Taste-tomato | 53.3 | 46.6 |
| Taste-PinnoThin | 7.5 | 15 |
| Taste (creaminess) | **37.5** | **46.6** |
| Overall taste | **Not acceptable** | **Acceptable** |

### Conclusions:

- Sauce comprising 4% PinnoThin appears to be more creamy than sauce comprising 3.5 sunflower oil and 0.5% PinnoThin
- Sauce comprising 4% PinnoThin tastes more creamy than sauce comprising 3.5 % sunflower oil and 0.5% PinnoThin
- 50% of the panellists found the taste of sauce A not acceptable,

### Example 4

### Tomato soup showing the effect of the level of pinolenic acid

Three tomato soups were prepared to show the effect of different levels of added pinolenic acid (as the triglyceride) on the properties of soup. The soups were prepared as follows.

50% of water was added to the "ready to make" soup (California^{™} tomatensoep, having a calorie content of 25kcal per serving, and containing, per serving, 0.5g protein, 4.0g carbohydrate and 0.5g fat). The whole soup was filtered to remove solid particles. After filtration, the soup was warmed up to 50°C and divided into three equal parts (A, B and C). To soup A, 0.2% by weight of PinnoThin^{™} was added, to soup B 4% by weight of PinnoThin^{™} was added and to soup C 24% by weight of PinnoThin^{™} was added. The addition of PinnoThin^{™} was performed at 50°C by using an Ultra Turrax for homogenisation (200/50 bar).

Soups A, B and C were assessed by a group of six trained panellists who rated the sauces on a scale of from 0 to 100 (with 100 being the greater creaminess, odour and taste)'. The average values were calculated.

The results were as follows:

| | Soup A | Soup B | Soup C |
|---|---|---|---|
| Appearance (creaminess) | **29.1** | **57.7** | **57.1** |
| Odour-tomato | 58.1 | 36.1 | 28.6 |
| Odour-PinnoThin | 4.4 | 23.7 | 40.6 |
| Taste - tomato | 57.7 | 41.6 | 24.3 |
| Taste - PinnoThin | 6.6 | 36.2 | 56.5 |
| Taste (creaminess) | **33.2** | **58** | **71.6** |
| Overall taste preference | **Less preferred** | **Most preferred** | **Least preferred** |

Soup B provided a surprising increase in creaminess, both in appearance and taste, even at its relatively low level of pinolenic acid, with the effect being comparable to far higher levels of pinolenic acid.

## Claims

1. A soup or sauce comprising: water; one or more components selected from meat ingredients, vegetable ingredients and carbohydrates; and from 0.5 to 20% by weight added fat, wherein said fat comprises from 5 to 35% by weight pinolenic acid.

2. A soup or sauce as claimed in Claim comprising from 1% to 10% by weight carbohydrates and from 0.5% to 10% by weight protein.

3. A soup or sauce as claimed in Claim 1 or Claim 2, comprising carbohydrates selected from the group consisting of sucrose, starch, modified starch, xanthan and mixtures thereof, and /or one or more sources of protein selected from the group consisting of whey solids, skimmed milk powder, soya protein, low fat yoghurt, skimmed milk and mixtures thereof.

4. A soup or sauce according to any one of the preceding claims comprising at least 60% by weight of water, preferably at least 70% by weight water, more preferably from 80 to 95% by weight water, and/or an added fat A and a further fat B, wherein fat A comprises from 5 to 35% by weight pinolenic acid and fat B is selected from the group consisting of: dairy fats (such as butter, cream and sour cream); cocoa butter equivalents, cocoa butter, palm oil or fractions thereof, palm kernel oil or fractions thereof, interesterified mixtures of above fats or fractions or hardened components thereof; liquid oils, such as sunflower oil, high oleic sunflower oil, soybean oil, rapeseed oil, cottonseed oil, safflower oil, high oleic safflower oil; olive oil, flaxseed oil, maize oil or MCT oils; and mixtures thereof

5. A soup or sauce according to any one of the preceding claims which has an energy content of less than 100 kcal /100g, preferably less than 80kcal/100g, more preferably from 55 to 75kcal/100g.

6. A soup or sauce according to any one of the preceding claims comprising one or more additives selected from flavours, colouring agents, vitamins, acidity regulators, preservatives, emulsifiers, antioxidants, dietary fibres and mixtures thereof.

7. A soup or sauce claimed in any one of the preceding claims, wherein at least a portion of the added fat is incorporated in the soup or sauce in the form of a powder, preferably produced by spray drying a fat comprising pinolenic acid with protein and/or carbohydrate.

8. A soup or sauce claimed in any one of the preceding claims, which comprises from 1 to 10% by weight added fat.

9. A soup or sauce claimed in any one of the preceding claims, wherein said fat comprises from 10 to 20% by weight pinolenic acid.

10. A soup or sauce claimed in any one of the preceding claims, which is a vegetable soup, such as a tomato or mushroom soup.

11. A composition which, upon rehydration with water, forms a soup or sauce according to any one of Claims 1 to 10.

12. to A process for producing soup or sauce according to any one of Claims 1 to 10 or a composition according to Claim 11, which comprises adding to one or more components selected from water, meat ingredients, vegetable ingredients and carbohydrates, from 0.5% to 20% by weight fat, wherein said fat comprises from 5 to 35% by weight pinolenic acid.

13. A process according to Claim 12, which comprises:
(i) forming an emulsion of the fat in water in the presence of a protein;
(ii) forming a dispersion or solution of a carbohydrate in water,
(iii) optionally adding one or more additional ingredients;
(iv) mixing the compositions prepared in steps (i) and (ii) under shear;
(v) optionally homogenising and/or pasteurising; and
(vi) optionally cooling.

14. Use of a fat comprising from 5 to 35% by weight pinolenic acid in a soup or sauce for improving the appearance and/or the organoleptic properties of the soup or sauce, such as for improving the creaminess of the soup or sauce.

15. Use as claimed in Claim 14, wherein the fat is added to the soup or sauce in an amount of from 1 to 10% by weight and/or the fat comprises from 10 to 20% by weight pinolenic acid.

## Patentansprüche

1. Suppe oder Soße, die Wasser; eine oder mehrere Komponenten, welche aus Fleischbestandteilen, pflanzlichen Bestandteilen und Kohlenhydraten ausgewählt sind; und von 0,5 bis 20 Gewichts-% zugesetztes Fett aufweist: wobei das Fett von 5 bis 35 Gewichts-% Pinolensäure aufweist.

2. Suppe oder Soße nach Anspruch 1, die von 1 bis 10 Gewichts-% Kohlenhydrate und von 0,5 bis 10 Gewichts-% Proteine aufweist.

3. Suppe oder Soße nach Anspruch 1 oder 2, die Kohlenhydrate, welche aus der Gruppe bestehend aus Saccharose, Stärke, modifizierter Stärke, Xanthan und Mischungen davon ausgewählt sind, und/oder eine oder mehrere Proteinquellen, welche aus der Gruppe bestehend aus Molkefeststoffen, Magermilchpulver, Sojaprotein, fettarmem Yoghurt, entrahmter Milch und Mischungen davon ausgewählt sind, aufweist.

4. Suppe oder Soße nach einem der vorangehenden Ansprüche, die mindestens 60 Gewichts-% Wasser, vorzugsweise mindestens 70 Gewichts-% Wasser, mehr bevorzugt von 80 bis 95 Gewichts-% Wasser, und/oder ein zugesetztes Fett A und ein weiteres Fett B aufweist, wobei das Fett A von 5 bis 35 Gewichts-% Pinolensäure aufweist und das Fett B aus der Gruppe ausgewählt ist, die besteht aus: Milchfetten (so wie Butter, Sahne oder Sauerrahm), Kakaobutteräquivalenten, Kakaobutter, Palmöl oder Fraktionen davon, Palmkernöl oder Fraktionen davon, veresterten Mischungen der obigen Fette oder Fraktionen oder gehärteten Komponenten davon; flüssigen Ölen, so wie Sonnenblumenöl, hochgradig Oleinsäure enthaltendes Sonnenblumenöl, Sojaöl, Rapsöl, Baumwollöl, Färberdistelöl, hochgradig Oleinsäure enthaltendes Färberdistelöl, Olivenöl, Leinsamenöl, Maisöl oder Ölen mit Triglyceriden mittlerer Kettenlänge (MCT-Ölen) und Mischungen davon.

5. Suppe oder Soße nach einem der vorangehenden Ansprüche, die einen Energiegehalt von weniger als 100 kcal/100 g, vorzugsweise weniger als 80 kcal/100 g, mehr bevorzugt von 55 bis 75 kcal/100 g aufweist.

6. Suppe oder Soße nach einem der vorangehenden Ansprüche, die einen oder mehrere Zusatzstoffe aufweist, welche aus Geschmacksstoffen, Farbstoffen, Vitaminen, Säureregulatoren, Konservierungsmitteln, Emulgiermitteln, Antioxidationsmitteln, diätetischen Fasern und Mischungen davon ausgewählt sind.

7. Suppe oder Soße nach einem der vorangehenden Ansprüche, wobei mindestens ein Teil des zugesetzten Fetts in die Suppe oder Soße in Form eines Pulvers eingebracht ist, das vorzugsweise durch Sprühtrocknen eines Pinolensäure aufweisenden Fetts zusammen mit Proteinen und/oder Kohlenhydraten hergestellt ist.

8. Suppe oder Soße nach einem der vorangehenden Ansprüche, die 1 bis 10 Gewichts-% zugesetztes Fett aufweist.

9. Suppe oder Soße nach einem der vorangehenden Ansprüche, wobei das Fett von 10 bis 20 Gewichts-% Pinolensäure aufweist.

10. Suppe oder Soße nach einem der vorangehenden Ansprüche, die eine Gemüsesuppe, wie beispielsweise eine Tomaten- oder Pilzsuppe, ist.

11. Zusammensetzung, die bei Rehydrierung mit Wasser eine Suppe oder Soße nach einem der Ansprüche 1 bis 10 ausbildet.

12. Prozess zur Herstellung einer Suppe oder Soße nach einem der Ansprüche 1 bis 10 oder einer Zusammensetzung nach Anspruch 11, der das Hinzufügen von 0,5 bis 20 Gewichts-% Fett, wobei das Fett von 5 bis 35 Gewichts-% Pinolensäure aufweist, zu einer oder mehreren Komponenten, welche aus Wasser, Fleischbestandteilen, pflanzlichen Bestandteilen und Kohlenhydraten ausgewählt sind, aufweist.

13. Prozess nach Anspruch 12, der aufweist:
(i) Ausbilden einer Emulsion des Fetts in Wasser in der Anwesenheit eines Proteins;
(ii) Ausbilden einer Dispersion oder Lösung eines Kohlenhydrats in Wasser;
(iii) optional Hinzufügen eines oder mehrerer zusätzlicher Bestandteile;
(iv) Mischen der Zusammensetzungen hergestellt in den Schritten (i) und (ii) unter Scherung;
(v) optional Homogenisieren und /oder Pasteurisieren; und
(vi) optional Kühlen.

14. Verwendung eines Fetts, das von 5 bis 35 Gewichts-% Pinolensäure aufweist, in einer Suppe oder Soße zum Verbessern der Erscheinung und/oder der organoleptischen Eigenschaften der Suppe oder Soße, so wie zum Verbessern der Cremigkeit der Suppe oder Soße.

15. Verwendung nach Anspruch 14, wobei das Fett zu der Suppe oder Soße in einer Menge von 1 bis 10 Gewichts-% zugesetzt wird und/oder das Fett von 10 bis 20 Gewichts-% Pinolensäure aufweist.

## Revendications

1. Soupe ou sauce comprenant: de l'eau ; un ou plusieurs composants choisis parmi des ingrédients de viande ; des ingrédients de légumes et des glucides ; et de 0,5 à 20 % en poids de matière grasse ajoutée, dans laquelle ladite matière grasse comprend de 5 à 35 % en poids d'acide pinolénique.

2. Soupe ou sauce selon la revendication 1, comprenant de 1 % à 10 % en poids de glucides et de 0,5 % à 10 % en poids de protéine.

3. Soupe ou sauce selon la revendication 1 ou la revendication 2, comprenant des glucides choisis dans le groupe constitué par le saccharose, l'amidon, l'amidon modifié, le xanthane et leurs mélanges, et/ou une ou plusieurs sources de protéine choisies dans le groupe constitué par la matière sèche de lactosérum, la poudre de lait écrémé, la protéine de soja, un yaourt pauvre en matière grasses, le lait écrémé et leurs mélanges.

4. Soupe ou sauce selon l'une quelconque des revendications précédentes, comprenant au moins 60 % en poids d'eau, de préférence au moins 70 % en poids d'eau, de manière davantage préférée de 80 à 95 % en poids d'eau, et/ou une matière grasse A ajoutée et une matière grasse B supplémentaire, dans laquelle la matière grasse A comprend de 5 à 35 % en poids d'acide pinolénique et la matière grasse B est choisie dans le groupe constitué par: les matières grasses laitières (telles que le beurre, la crème et la crème aigre); les équivalents de beurre de cacao, le beurre de cacao, l'huile de palme ou des fractions de celle-ci, l'huile de palmiste ou des fractions de celle-ci, les mélanges interestérifiés des matières grasses précédentes ou des fractions ou des composants durcis de celles-ci; les huiles liquides, telles que l'huile de tournesol, l'huile de tournesol riche en oléique, l'huile de soja, l'huile de colza, l'huile de coton, l'huile de carthame, l'huile de carthame riche en oléique, l'huile d'olive, l'huile de lin, l'huile de maïs ou les huiles de triglycéride à chaîne moyenne (MCT); et leurs mélanges.

5. Soupe ou sauce selon l'une quelconque des revendications précédentes, qui a une valeur énergétique inférieure à 100 kcal/100 g, de préférence inférieure à 80 kcal/100 g, de manière davantage préférée de 55 à 75 kcal/100 g.

6. Soupe ou sauce selon l'une quelconque des revendications précédentes, comprenant un ou plusieurs additifs choisis parmi les arômes, les agents colorants, les vitamines, les régulateurs d'acidité, les conservateurs, les émulsifiants, les antioxydants, les fibres alimentaires et leurs mélanges.

7. Soupe ou sauce selon l'une quelconque des revendications précédentes, dans laquelle au moins une partie de la matière grasse ajoutée est incorporée dans la soupe ou sauce sous la forme d'une poudre, de préférence produite par séchage par pulvérisation d'une matière grasse comprenant de l'acide pinolénique avec une protéine et/ou un glucide.

8. Soupe ou sauce selon l'une quelconque des revendications précédentes, qui comprend de 1 à 10 % en poids de matière grasse ajoutée.

9. Soupe ou sauce selon l'une quelconque des revendications précédentes, dans laquelle ladite matière grasse comprend de 10 à 20 % en poids d'acide pinolénique.

10. Soupe ou sauce selon l'une quelconque des revendications précédentes, qui est une soupe de légumes, telle qu'une soupe de tomate ou de champignons.

11. Composition qui, une fois réhydratée avec de l'eau, forme une soupe ou sauce selon l'une quelconque des revendications 1 à 10.

12. Procédé de production d'une soupe ou sauce selon l'une quelconque des revendications 1 à 10 ou d'une composition selon la revendication 11, qui comprend l'ajout à un ou plusieurs composants choisis parmi l'eau, les ingrédients de viande, les ingrédients de légume et les glucides, de 0,5 % à 20 % en poids de matière grasse, dans lequel ladite matière grasse comprend de 5 à 35 % en poids d'acide pinolénique.

13. Procédé selon la revendication 12, qui comprend les étapes consistant à:
(i) former une émulsion de la matière grasse dans l'eau en présence d'une protéine ;
(ii) former une dispersion ou une solution d'un glucide dans l'eau ;
(iii) éventuellement ajouter un ou plusieurs ingrédients additionnels ;
(iv) mélanger les compositions préparées aux étapes (i) et (ii) sous cisaillement ;
(v) éventuellement homogénéiser et/ou pasteuriser; et
(vi) éventuellement refroidir.

14. Utilisation d'une matière grasse comprenant de 5 à 35 % en poids d'acide pinolénique dans une soupe ou sauce pour améliorer l'aspect et/ou les propriétés organoleptiques de la soupe ou sauce, tel que pour améliorer l'aspect crémeux de la soupe ou sauce.

15. Utilisation selon la revendication 14, dans laquelle la matière grasse est ajoutée à la soupe ou sauce dans une quantité de 1 à 10 % en poids et/ou la matière grasse comprend de 10 à 20 % en poids d'acide pinolénique.
